# EUROPEAN PATENT APPLICATION

(11) **EP 3 726 835 A1**
(43) Date of publication of application: **21.10.2020**
(21) Application number: 20155917.6
(22) Date of filing: 28.01.2004
(51) Int. Cl.: H04N 7/24, H04L 29/06, H04N 21/2343, H04N 21/235, H04N 21/435, H04N 21/442, H04N 21/4725, H04N 21/485, H04N 21/81, H04N 21/858

(54) **SYSTEM AND METHOD FOR STREAMING MEDIA ENHANCEMENT**

(30) Priority: 28.01.2003 US 443635 P
(62) Divisional of application: 04001844.2
(71) Applicant: OpenTV, Inc., San Francisco, CA 94111 (US)
(72) Inventor: MARKEL, Steven O., Colorado, 80126 (US)
(74) Representative: Hoyng Rokh Monegier LLP

(57) **Abstract**

Methods for displaying descriptors in conjunction with a streaming media presentation are disclosed. Descriptors may be positioned on top of a streaming media image to provide association with image elements of the presentation. The availability of descriptors for an image element may be indicated highlighting the element, highlighting the element when a cursor is over the element, or changing cursor appearance when over the element. Interactive access points responsive to user input may provide links or may control selection and rendering of descriptors. Element indicators may be displayed to associate descriptors with image elements. Image element identifiers may also provide association with image elements, wherein such association may be dynamic, and may indicate user response actions for additional or updated descriptors. A receiving unit receives a streaming media presentation and renders the presentation and any descriptors, indicators, highlights, and/or image element identifiers.

## Description

### Field of the Invention

The present invention pertains generally to interactive video and specifically to streaming video with on-screen enhancements.

### Description of the Background

Streaming media presentations may provide additional enjoyment to viewers, or may attract additional viewers, through the presentation of enhancements in conjunction with the streaming media presentation. Such enhancements may comprise text, graphics, audio, or video and may be indexed to a particular frame or time in the displayed content. Enhancements may provide additional information about content being presented in a streaming media presentation. For example, enhancements may be in the form of messages that provide additional information about the topic that is being presented in a streaming media presentation, or additional information about a specific scene, the actors or actresses in a scene, or products that are shown within a scene. The viewers can turn these messages on or off as they desire.

Presently, enhancements associated with streaming media presentations typically comprise text or graphics displayed to the side (or above or below) displayed streaming media presentation images. United States Patent 6,175,840 to Chen discloses methods of indicating the location of a hot link region (hotspot) employing horizontal and vertical indicators adjacent to a streaming media presentation image. Chen also discloses that visual alteration the horizontal and vertical indicators describes a bar on orthogonal sides of a screen whereby the location of a hot spot may be ascertained. Enhancement objects have not, however, been synchronized to the streaming media presentation. If the streaming media presentation is interrupted, for whatever reason, display of the enhancement text and graphics continues even though the presentation has stopped. Chen does not disclose placing text, graphics, icons, or other indicators on the video image. Also, Chen does not address any latency or methods for keeping the hot spot active on the screen during scene changes.

Additionally, positioning of enhancement objects may result in problems in maintaining the association of the descriptors to specific individual elements within a streaming media presentation. For example, a scene may contain two elements (such as two actors, for example), each with a separate associated message. A message displayed to the left of the image is associated with the element appearing in a left portion of the image. Similarly, a message displayed to the right side of the displayed image is associated with the element on the right side of the image. Problems can occur if the elements are in motion, requiring frequent re-positioning of the messages, or when elements are in positions that make a correct association of a message with each element difficult, or when a plurality of elements are on the same side of the displayed image or are in similar positions.

Further, the display of messages to the side (or top or bottom) of streaming a media image also requires that the size of the image be less than that of the screen size to allow room for the messages. Such display formats may limit image quality or viewing distance.

### Summary of the Invention

The present invention overcomes the disadvantages and limitations of the prior art by providing a system and method of rendering interactive descriptors on the video display so that the video does not have to be reduced in size and so that the descriptors can be associated with the streaming media image elements to which they pertain. In contrast to displaying enhancements to the side of a streaming media image, the descriptor can be located proximate to, or in association with, the streaming media video element to which the descriptor pertains on the full size streaming media video.

The present invention may therefore comprise a method of rendering a descriptor in association with a streaming media presentation comprising receiving the streaming media presentation; accessing descriptor information; determining if descriptors are enabled; rendering the descriptor in a position that provides an association with a streaming media image element; executing a software routine if an interactive access point is enabled for the descriptor and a corresponding input is received; and discontinuing display of the descriptor if an end display condition has occurred.

The present invention may further comprise a method of rendering a descriptor in conjunction with a streaming media image element comprising receiving a streaming media presentation; accessing descriptor information; determining if descriptors are enabled; receiving pointing device position information; selecting a descriptor from the descriptor information using the position information; rendering the selected descriptor in a predetermined position associated with the streaming media image element and that does not obscure important streaming media presentation content; executing a software routine if an interactive access point is enabled for the descriptor and a corresponding input is received; and discontinuing display of the descriptor if an end display condition has occurred.

The present invention may further comprise a method of rendering a descriptor in association with a streaming media image element comprising receiving a streaming media presentation; accessing descriptor information; determining if descriptors are enabled; receiving pointing device position information; highlighting at least one streaming media image element; receiving a user input; selecting a descriptor from the descriptor information using the position information; rendering the selected descriptor in a predetermined position; executing a software routine if an interactive access point is enabled for the descriptor and a corresponding input is received; and discontinuing display of the descriptor if an end display condition has occurred.

The present invention may additionally comprise a method of rendering a descriptor in association with a streaming media image element comprising receiving a streaming media presentation; accessing descriptor information; displaying a streaming media image element identifier in a first screen position within a streaming media image; and, displaying a descriptor associated with the streaming media image element in a predetermined position that is associated with said streaming media image element.

The present invention may still further comprise a method of rendering a descriptor in association with a streaming media presentation comprising receiving the streaming media presentation, accessing descriptor information, displaying at least one streaming media image element identifier in a first screen position within a streaming media image, displaying a descriptor associated with the streaming media image element identifier in a predetermined position at least partially overlapping the streaming media image, and updating the descriptor in response to a user input associated with the streaming media image element identifier.

The present invention may further comprise a method of rendering a descriptor in association with a streaming media image element comprising receiving a streaming media presentation; accessing descriptor information; displaying at least one streaming media image element identifier in a first screen position providing association with the streaming media image element, displaying a descriptor associated with the first streaming media image element in a predetermined position at least partially overlapping the streaming media image, dynamically associating the streaming media image element identifier with a second streaming media image element in response to scene changes, and updating the descriptor to display information associated with the second streaming media image element.

Advantageously, embodiments of the present invention provide on-content enhancements, allowing full screen display of streaming media program images, with the enhancement objects associated with the streaming media image elements.

### Brief Description of the Drawings

In the drawings,
Figure 1 depicts a streaming media news presentation without enhancements.
Figure 2 illustrates the use of off-content enhancement objects with a news presentation.
Figure 3 illustrates the use of on-content descriptors with a news presentation.
Figure 4 illustrates an embodiment of the present invention where on-content descriptors are placed in predefined image locations.
Figure 5 depicts a streaming media program with a hotspot indicator.
Figure 6 depicts a streaming media program with cursor position selected on-content descriptors.
Figure 7 depicts a streaming media program with on-content descriptors and element indicators.
Figure 8 is a flowchart of steps employed to render a descriptor in association with a streaming media presentation.

### Detailed Description of the Invention

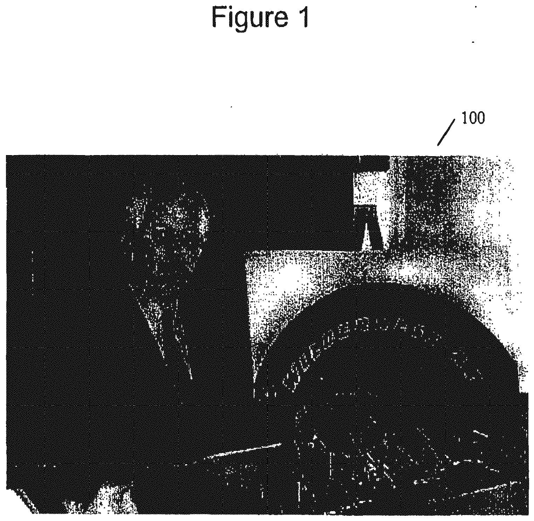

Figure 1 depicts a streaming media news presentation without enhancements. The streaming media image 100 is of a press conference announcing a tire recall comprising a first gentleman 102 (speaking), a second gentleman 104 (seated), and a picture of a tire 106 on an easel. The image is representative of a news feed from a camera at a press conference as may be shown in national nightly news programs. Image 100 may occupy a portion of a display screen, or may occupy the screen entirely, depending on screen resolution, image format, stream bandwidth, and processing power of the system on which the image is viewed.

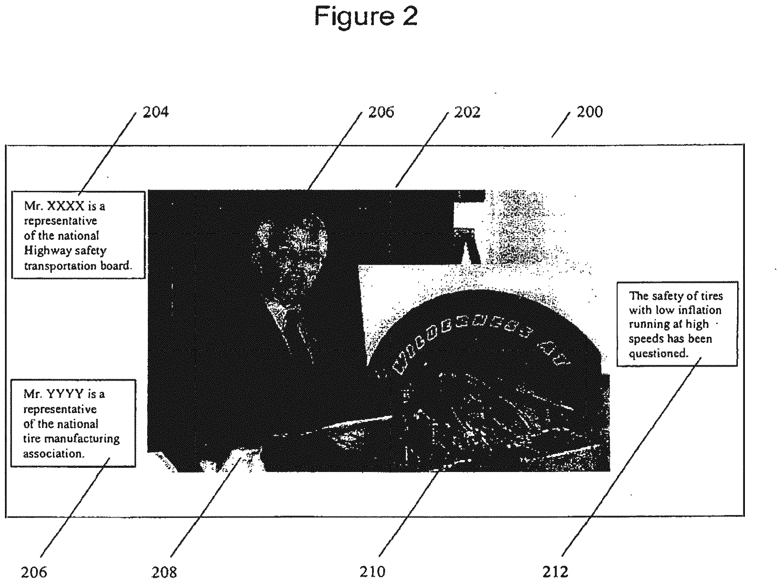

Figure 2 illustrates the use of off-content enhancement objects with the same news presentation. Screen display 200 comprises streaming media image 202, a first enhancement object 204 that shows text associated with a first streaming media image element 206, that corresponds to a gentleman speaking, and a second enhancement object 208 shows text associated with a second streaming media image element 210 that corresponds to the gentleman seated. The enhancement objects are rendered "off-content" such that they appear to the side of the streaming media image. Off-content enhancement objects require that the displayed streaming media image be reduced in size and only occupy a portion of the screen area such that there is sufficient room to display the enhancement object. The disadvantage of the format depicted in figure 2 is that the streaming media image must be smaller than the screen size, and that the association of the enhancement objects may become ambiguous if the associated streaming media image elements are located in ambiguous or misleading positions.

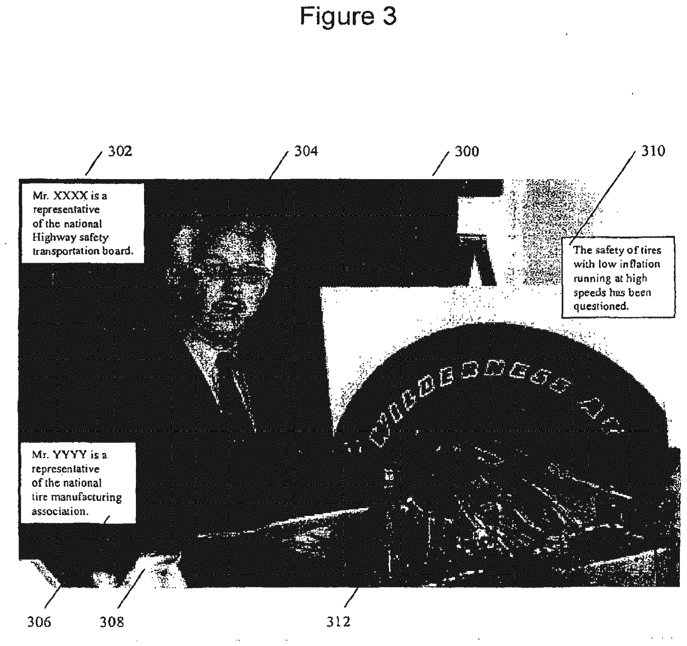

Figure 3 illustrates the use of on-content descriptors with the same news presentation. Descriptors may comprise text, graphics, video or other displayable entities and may include audio information that replaces or supplements audio that is part of a streaming media presentation. Descriptors may also contain one or more interactive access points (hotspots) that invoke a software routine when selected by a user. The software routine may be provide various functions associated with the descriptor such as scrolling, display of additional information, or may perform other functions including but not limited to accessing web sites, accessing other media streams, configuring display of descriptors, saving information, and the like. Selection of an interactive access point may comprise placing a cursor or other indicator over the access point and may also comprise a user input, such as clicking a mouse button, remote control button, or keyboard key, for example, either in combination with a position indicator or individually. For example, a descriptor may contain a letter, number, or other identifiable attribute to provide an indication of a key or button that may be employed to execute an interactive access point software routine. Figure 3 depicts streaming media screen display 300 with descriptors displayed within the streaming media image. Screen display 300 comprises a first descriptor 302 that shows text associated with a first streaming media image element 304 that corresponds to a gentleman speaking. A second descriptor 306 shows text associated with a second streaming media image element 308 that corresponds to the gentleman seated. A third descriptor 310 is associated with a third streaming media image element 312 that corresponds to an automobile tire. Descriptors need not be associated with a streaming media image element and may be employed, for example, to provide general information regarding a presentation. Advantageously, embodiments of the present invention allow the streaming media image to occupy the full area of the display screen. Further, the association of descriptors with streaming media image elements is not ambiguous since the position of the descriptors provides a clear indication of the association. The descriptors and associated hotspot functions may track the position of image elements as these elements change position within the streaming media image. As a scene changes, for example, descriptors may track the associated elements as they change position and be placed in positions in which they do not obscure important streaming media image information. The association of enhancement objects with image elements may further employ association indicators comprising dotted lines, arrows, text areas with pointers, concurrent highlighting, or other displayed objects. For example, a dotted line may be displayed between enhancement object 302 and first image element 304. If the descriptors or image elements change position over time (i.e. successive frames of a streaming media presentation) the dotted lines, arrows, etc. as described previously may also change location to reflect the change in descriptor or element position(s). Changes in position of a dotted line, descriptor or image element may be estimated or interpolated and position determination or estimation may employ a variety of methods including methods disclosed in U.S. patent application serial number 60/354,745 entitled "Tracking Moving Hot Spots With Interactive Access Points", filed February 6, 2002 by Steven O. Markel and Ian Zenoni which is specifically incorporated herein for all that it discloses and teaches. Such estimation or interpolation may be employed to move the dotted lines or other association indicators to appropriate locations and may performed over successive frames. Concurrent highlighting refers to providing a visual alteration for both an enhancement object and an image element such that the enhancement object may be associated with the image element. Highlighting may employ any methods including those disclosed later herein.

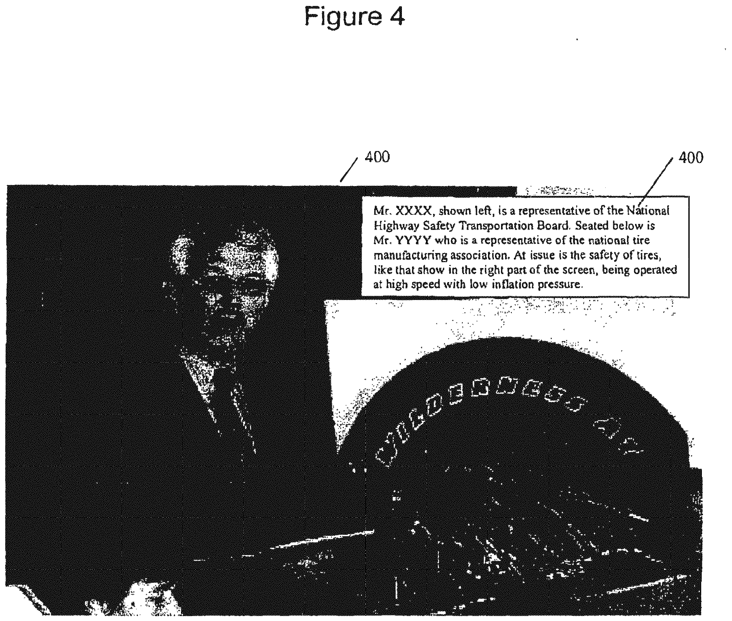

Figure 4 illustrates an embodiment of the present invention where on-content descriptors are placed in predefined image locations. In figure 4, streaming media image 400 is combined with descriptor 402. In this embodiment, the descriptor is not associated with a specific streaming media image element, but provides a general description of the displayed content. Locations of the descriptors may be selected during an authoring process and may comprise locations that do not contain images central to the content presented. For example, descriptors may be rendered in background areas not showing content relevant to the understanding of the program. Selecting the descriptor with a mouse or other pointing device may provide additional information. Advantageously, the embodiment of figure 4 may be employed to display information across several scene changes because the descriptor(s) are not associated with a particular streaming media image element. As depicted in figure 4, a descriptor may have a different background color than the streaming media image. Selection of fonts relative to the embodiments of the present invention (including font type, size, color, transparency, and background color) may be performed as part of an authoring process or may be performed in part by the receiving unit. For example, a software program operating in a receiving unit may determine the color or colors of fonts and background(s) to be rendered. The software program may select a font color that produces discernable text, may select a text type (such as stencil or outline text, for example), or may select a text background that produces discernable text. Further, the combination of text (or other visual enhancements of embodiments of the present invention) and streaming media content may employ any raster ops, BITBLTS (bit-block logic transfers), mathematical operations, logical operations, or any other combination thereof. Such combination allows presentation of text in a wide range of formats including, but not limited to, half-toning, partial mix, blend, see-through, etc. Additionally, methods of combination may be specified to vary over time, providing text that fades in and out, blinks, changes color, or produces any other visual effect over time.

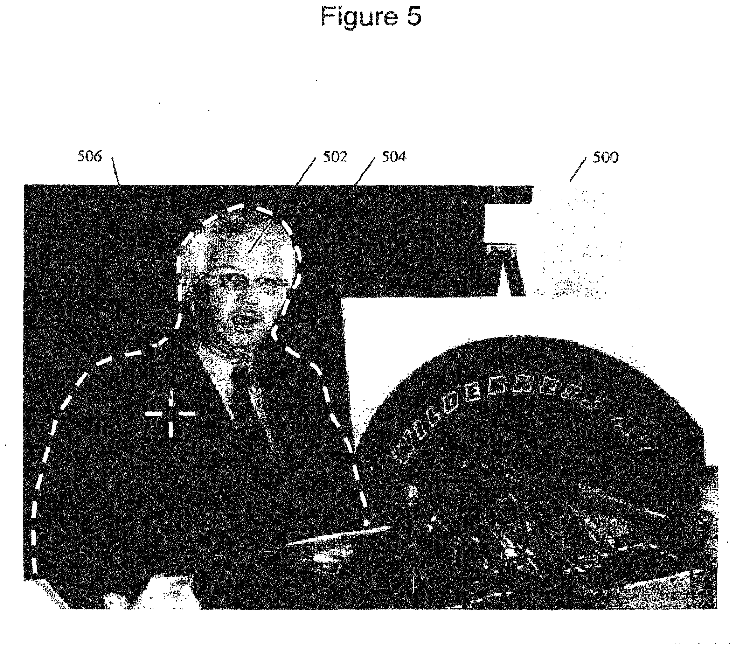

Figure 5 depicts a streaming media program with a hotspot indicator. Within streaming media image 500, a cursor 506 is positioned over or in proximity to streaming media image element 502, resulting in highlight 504 being displayed to indicate that at least one descriptor associated with streaming media image element 502 is available. The area of the displayed image in which cursor position provides an indication relative to an image element is termed a hotspot. The size and shape of the hotspot area may conform to that of the image element, or may be of different size. For example, when small image elements are displayed, the hot spot area may be larger than the area of the image element such that a cursor position in proximity to the image element may activate the hotspot. A user input, such as a mouse button event or keyboard entry, for example, entered while the cursor over the hotspot may enable rendering of an associated descriptor.

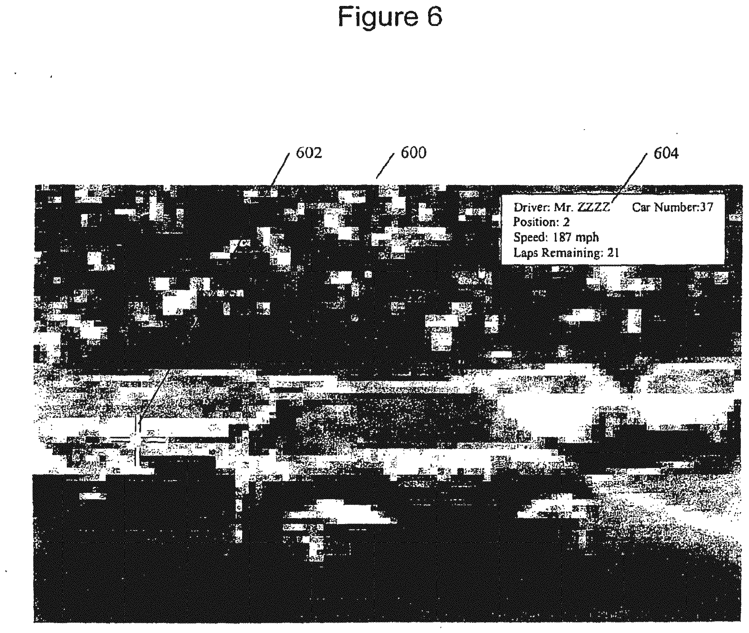

Figure 6 depicts a streaming media program with cursor position selected on-content descriptors. A cursor 602 is positioned within streaming media image 600. When cursor 602 is positioned over or in proximity to a streaming media image element for which a descriptor is available, the descriptor 604 is rendered. The position of descriptor 604 may be positioned such that no relevant scene information is obscured. Alternatively, the position of descriptor 604 may be user specified or adjustable and may employ methods similar to methods that allow picture-in-picture (PIP) windows to be placed at various positions on the screen and a size to be selected. Descriptor 604 may comprise text, and if the amount of text is greater than may be displayed at one time in the size of descriptor 604, descriptor 604 may contain a scroll bar or other button, or the text may automatically scroll at a predetermined rate. Descriptor 604 may also contain one or more interactive access points (hotspots) to provide control functions. For example, words such as "more" or "back" may provide scroll or page up and down functions. Additionally, hotspots may be implemented in upper and or lower portions of the descriptor allowing control selection with a pointing device. Alternatively, another input device such as a remote control or keyboard, for example, may be employed for descriptor display control. If more than one descriptor is rendered, one descriptor may include an indication, such as a predetermined outline color, for example, showing that it is the descriptor currently associated with a user input device. A pointing device or other user input device may be employed to change the descriptor which is associated with the input device.

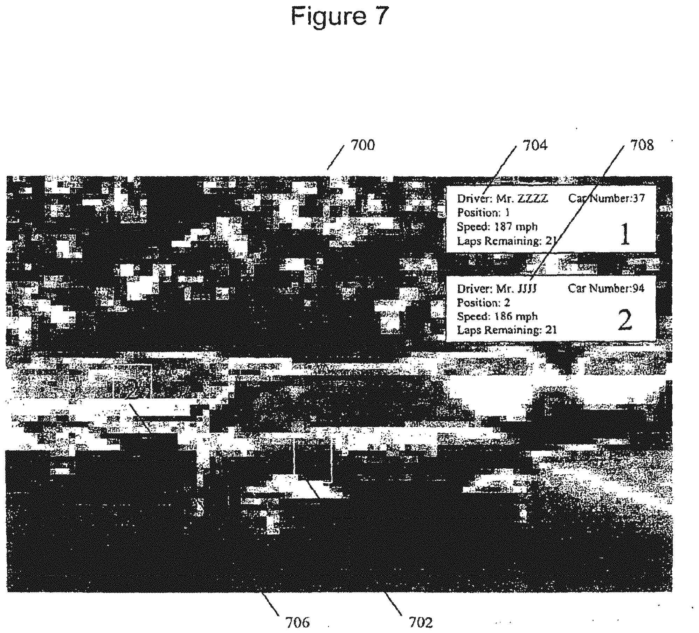

Figure 7 depicts a streaming media program with on-content descriptors and element indicators. Streaming media image 700 depicts a portion of a streaming media program. A first element indicator 702 indicates a first streaming media image element that is associated with descriptor 704. A second element indicator 706 indicates a second streaming media image element associated with descriptor 708. The method depicted in figure 7 allows descriptors to be placed in a position that reduces or eliminates obscuration of relevant images while providing an unambiguous association of descriptors with streaming media image elements.

In a further embodiment that may employ methods shown in figures 6 and 7, a user may select one or more streaming media image elements for which descriptors will be rendered, and such rendering may continue until a different configuration is selected or until descriptors are not available for the selected image element(s). For example, in a stock car race, the user may select one or more cars and descriptors associated with these objects will be rendered as available during the program and the descriptors may be displayed when the associated image element or elements are not visible. Alternatively, descriptors associated with selected image elements may be rendered only when the selected image elements are displayed. Descriptors may be disabled or may be replaced by other descriptors during commercial messages.

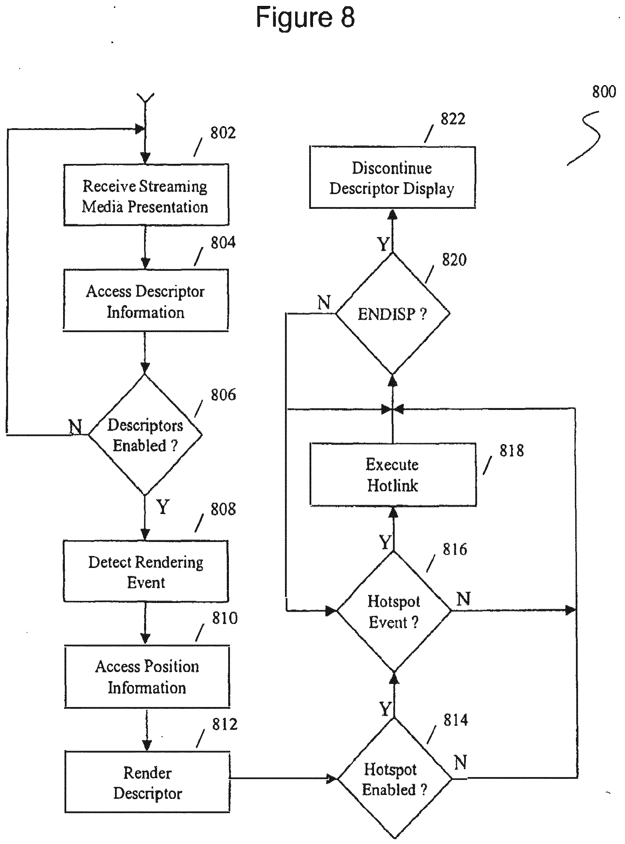

Figure 8 is a flowchart of steps employed to render a descriptor in association with a streaming media presentation. At step 802, a streaming media presentation is received. Such reception may comprise transfer across a network such as the Internet, a local area network, a wide area network, or any other network including cellular systems. At step 804, descriptor information is accessed. Descriptor information may include locally (at the receiver) defined information such as viewer preferences, type of descriptors to be enabled, icon types, font sizes and the like. Access may comprise receiving descriptor information as part of a stream, or accessing descriptor information across a network. Additionally, descriptor information may be transferred to a receiver prior to the transmission of a streaming media presentation. At step 806, the receiver checks if descriptors are enabled. If descriptors are not enabled, processing continues at step 802. If descriptors are enabled, a rendering event is detected at step 808. A rendering event may comprise the occurrence of a time, frame number, trigger, user input signal, network signal, or other signal employed to identify when a descriptor may be rendered. At step 810, descriptor position information is accessed. Such position information may define a descriptor position that provides easy association with a streaming media image element and that does not obscure essential program content. At step 812 the descriptor is rendered. Rendering may employ any of the combination methods disclosed herein. At step 814 a check is performed to determine if a hotspot is enabled for the descriptor. If a hotspot is not enabled, processing continues at step 820. If step 814 determines that a hotspot is enabled, step 816 determines if a hotspot event has occurred. If no hotspot event has occurred, processing continues at step 820. A hotspot event may comprise a user input (such as a mouse event, for example), expiration of a time period (for self scrolling descriptors), network transfers (such as an update for an active descriptor showing stock values, for example) of other condition that prompts execution of software pertinent to the descriptor. If step 816 determines that a hotspot event has occurred, the corresponding hotlink is executed at step 818. Step 820 determines if an end display condition has occurred. If no end display condition has occurred, processing continues at step 816 if a hotspot was enabled or at step 820 if a hotspot was not enabled. An end display condition may comprise the detection of an elapsed time, a frame number or picture position, a user input turning off descriptors, stopping of a media player, network signal, or other condition that controls the duration or cessation of display of a descriptor. If an end display signal is detected at step 820, display of the descriptor is discontinued at step 822.

The streaming media presentation may be displayed using a "media player" that provides viewing controls such that the presentation may be paused, reversed, forwarded, etc., as is common to media players such as Windows Media Player from Microsoft Corporation. Such controls may be employed to pause or position a presentation such that hotspots may be selected or different hotspots or descriptors selected during multiple viewings of a portion of the presentation. For example, a user may pause a presentation to select a hotspot or to fully explore the descriptors available in the paused image. In this manner, a user may more easily select hotspots or may try various versions of descriptors. For example, a presentation may provide alternate language choices when a hotspot is selected. Through multiple viewings of a portion of the presentation and selection of different language choices, a user may hear dialogue or view subtitles presented in a number of different languages. Similarly, a user may elect to have statistics displayed for different cars during multiple viewings of a portion of a car race presentation.

The definition and creation of hotspots and descriptors may employ methods disclosed U.S. patent application serial number 09/935,492 entitled "System and Method for Web Based Enhanced Interactive Television Content Page Layout", filed August 23, 2001 by Steven O. Markel; and by methods disclosed in U.S. patent application serial number 10/041,881 entitled "Creating On Content Enhancements", filed October 24, 2001 by Gary Rasmussen et al. Tracking of hotspots may employ methods disclosed in U.S. patent application serial number 60/354,745 entitled "Tracking Moving Hot Spots With Interactive Access Points", filed February 6, 2002 by Steven O. Markel and Ian Zenoni.

Embodiments of present invention may be employed to provide descriptors in association with commercial messages such that local dealer, vendor, or other information is displayed. For example, an advertisement for automobiles may be enhanced with a descriptor providing local dealer information, specials, etc. Additionally, the descriptor(s) may appear to be conformally mapped to a surface, such as the side of an automobile or appliance, for example, causing the descriptor to appear as part of a scene. Advertising descriptors may also be rendered during presentation of a program and may employ background areas, such as walls in stadiums, backboards and the like and may also replace portions of program images such as billboards, for example. The display of advertising messages may employ methods disclosed in U.S. patent application serial number 10/212,289 entitled "Post Production Visual Alterations", filed August 2, 2002 by Thomas Lemmons.

Embodiments of the present invention may be configured such that a user may enable or disable the rendering of descriptors. Descriptors may provide dynamic or real-time information such as stock car parameters, stock values, temperatures and the like. In one embodiment, descriptors may be rendered when a cursor or other positioning indicator is over or in the proximity of a streaming media image element. In another embodiment, an indicator such as an icon, for example, may be displayed in a predetermined screen area (i.e. lower right comer of the screen) to indicate that descriptors are available. Selection of the icon with a mouse or other pointing device, or remote control or keyboard entry, may enable rendering of the descriptor(s). In yet another embodiment, a indication of descriptor availability may be provided for one or more streaming media image elements through the display of an icon, highlighting, or other visual or audible artefacts associated with the streaming media image elements such that positioning a cursor or other user input device over or in proximity to the streaming media image elements results in the rendering of one or more descriptor(s), For example, an image of an automobile maybe highlighted if a descriptor is available. Alternatively, a descriptor of this embodiment may be rendered when a cursor or other user input device is over or in proximity to the streaming media image elements and a user input, such as a pointing device button click or keyboard input, for example, is received. Highlighting and other visual artefacts may comprise outlining, blinking, color shift, intensity shift, color blending, patterning blending, waver, shimmer, pixel scramble and/or pixel decimation (commonly used to obscure subject identity or nudity), over-size display of an image element, or any other method, or combination of methods providing a visual indication. Highlighting may also employ any of the aforementioned methods of combination including raster ops, BITBLTS, mathematical, and logical operations, or a sequence of such operations over a period of time. Audible artefacts may include tones, beeps, audio segments (such as "click on me", for example) and other sounds to indicate the availability of a descriptor. As noted previously, a descriptor may comprise text, graphics, video, images, or audio. Text type descriptors may include scroll buttons to allow a user to access a larger amount of information than may be presented on the screen at one time, or text objects may provide an automatic scroll rate and may provide controls to reposition text to the start, maintain the text object until closed by a user, or cause the text object to remain visible for a predetermined period, An audio descriptor may provide additional commentary, humorous comments, sound effects and the like.

Visual descriptors may be combined with or overlaid on the streaming media image. Combination may include may comprise any raster-ops, bit-bits (block logic transfers), or any other operations provided by an operating system or streaming media display environment including but not limited to mathematical operations including but not limited averaging, blending, mixing, and saturation. Display of descriptors or descriptor availability indicators may employ overlay hardware, such as is common for cursors, hardware windowing, or other non-sequential addressing methods.

Visual descriptors (including descriptor availability indicators and element indicators) may exhibit any characteristics and attributes that maybe provided through the streaming media display environment, plug-ins, operating system or other software and hardware. Descriptors may be opaque or may be semi-transparent and may have color and/or other visual features. Visual features, such as a border around the descriptor, the thickness of the border, a blinking / change in intensity of the border, icons and other graphical elements, for example may be used to indicate attributes of descriptors. Such attributes may indicate an action associated with a descriptor, the type of descriptor and type of associated content, the length or detail of the interactive content, whether the item highlighted is offered for sale or a special promotion, the importance of the content with respect to the story, the length of time that the descriptor will remain active, the source of the interactive content, or other parameters as may be desired. For example, a hotspot with a small text icon may cause a small window to be created over a portion of the video display and show a short biography of a person, or a hot spot with a camera icon cause a replay of a scene that was shown previously.

In some embodiments, the viewer may have the option to turn off the hotspots from the display. An embodiment may begin showing a streaming media presentation and display a small icon in a predetermined area of the screen, indicating the availability of one or more descriptors. The user may then employ a mouse or other input device to display the descriptor(s) on the screen and select one as desired. In some embodiments, the viewer may have the ability to pay an extra fee or surcharge to enjoy the interactive content. Such an embodiment may have premium interactive content that is very interesting and engaging to the viewer. In other embodiments, the viewer may elect to pay an extra fee or surcharge to have the ability for hotspot advertisements to be removed from the streaming media presentation. Alternatively, such embodiments may use enhancement objects to such an extent that the viewers are annoyed to the point where they would be willing to pay to have them removed. In some embodiments, the viewer may have the ability to choose which enhancement objects may be rendered at a predetermined time. For example, a selected set of enhancement objects, such as only the enhancement objects for a particular team competing in a football game might be made available, with any other enhancement objects not active during a broadcast.

In any of the aforedescribed embodiments, the cursor may be configured to change appearance to indicate that the viewer has moved over an image element with an associated descriptor. In some embodiments, when the viewer moves a cursor over an image element, an image element object border may be produced, a descriptor may be rendered, or some other graphical representation may be shown. In other embodiments, a menu of several selections may be made available to the viewer.

The shape of an indicator or descriptor may be employed to identify the type of information that may be linked to the hotspot and may not be necessarily linked to a specific image element on the screen. For example, an indicator or descriptor with a specific graphic, such as a 'Y' or 'N' graphic, for example, may be selected in response to a particular query, such as a confirmation of an order.

Further, a shape or other characteristic on an indicator (such as indicators 702 and 706 in figure 7, for example) may correspond with a particular button on an input device. For example, the descriptor 702 has the letter '1', that may be employed to indicate that pressing the keyboard character labeled '1' on the presentation device keyboard, remote control, or other device would enable or disable an associated descriptor or descriptors that may provide additional information. The image element reference to an indicator may also be dynamic. For example, the image element indicator 702 shown in figure 7 is displayed as the number "1" and may refer to a first car for which descriptors are selected, or the indicator may indicate the car position in the race for which descriptors are desired such that if the lead position changes, descriptors associated with the image element indicator would also change. Update of information may be in response to user input such that pressing the " 1" key on the keyboard will update the information on the first place car. Similarly, pressing "2" will provide information for the second place car.

The placement of the descriptor on the screen draws the viewer into the program as the viewer becomes involved in the interactive aspects of the program. The viewer may watch the screen and find the object with a cursor as the viewer engages the interactive content. The viewer is focused on the object, not a button that may relate to the object that is located on the side of the screen. This is a powerful advantage for advertisers, who may be offering a product for sale as an impulse purchase. Such an advertisement may be much more effective if the purchaser does not lose focus on the product. Further, products "naturally" displayed in a program, such as soft drinks, automobiles, and the like, may have "hidden" attributes, allowing viewers to win prizes, accumulate points, participate in contests or other activities. For example, hotspots may be "hidden" such that viewer may click on various images to see what happens. Product image interaction may employ methods disclosed in U.S. patent application serial number 10/099,054 entitled "Affinity Marketing for Interactive Media Systems", filed March 13, 2002 by Steven O. Markel which is specifically incorporated herein for all that it discloses and teaches.

Advertising may employ methods disclosed in U.S. Patent application serial number 09/997,022 entitled "Displaying Full Screen Streaming Media Advertising", filed November 27, 2001 by Steven O. Markel.

An indicator or descriptor may be employed to draw special attention to the image element to which it refers. For image elements that appear small on the video screen, a highlighted graphic indicator or descriptor referring to the image element may be employed to draw viewer attention to the image element. Advantageous to advertisers, drawing attention to a product or service offering may result in increased product or service awareness and sales. Methods used to draw attention to a product or service may employ any of the previously described highlighting, descriptor availability indication, and descriptor presentation methods.

In embodiments where multiple indicators or descriptors are located on the same streaming media image, they may sometimes overlap. The producer or creator of the programming may develop rules to resolve how to handle the overlapping indicators and/or descriptors. For example, when a first indicator refers to a first image element that is in front of a second image element that also has an indicator, the indicator or descriptor of the first image element may be given priority. In other cases, the area of overlap may be divided, with a portion being assigned to one indicator/descriptor object and another portion of the overlapping area assigned to the second indicator/descriptor. In other cases, the order of indicators or descriptors may be controlled by the order in which the indicators or descriptors are defined. Those skilled in the art may create other rules and methods of handling overlapping indicators and/or descriptors without violating the spirit of the present invention. For example, click and drag, right button click, click while another key is depressed, etc may be employed to select among multiple indicators or descriptors.

The viewer may select the modes for the display of descriptors. The modes selected by the viewer may be set for a specific broadcast, for each instance or type of a program such as a football contest, for a certain broadcast channel, for a certain period of time, or for all programs. The receiving unit may store a particular viewer's settings separate from a second viewer's settings. In this manner, each viewer may configure their own preferences.

Descriptors may be classified into groups or types when they are created. Individual groups or types of descriptors may be selectively displayed. For example, if a viewer is watching a football game, and the viewer is a fan of a particular player, the viewer may elect to have the indicators and/or descriptors and associated hotspots for that particular player displayed.

As disclosed previously, embodiments of the present invention may also be employed when a streaming media program is stopped or paused. Selection of an indicator or image element, or rendering of a descriptor may also be employed to control display of a streaming media program such that the program may be paused or stopped to allow the viewer to access and/or select descriptors. The program may be resumed in response to a viewer input or after a predetermined time. Methods of the present invention may be employed to display descriptors that require user interaction to continue display of a presentation. For example, an interactive descriptor may be displayed that pauses showing of a presentation until a commercial message is viewed. The presentation may then be resumed after viewing of the commercial message. Display of commercial messages may employ methods disclosed in "Displaying Full Screen Streaming Media Advertising" previously incorporated herein. The resumption of the program may be in-sequence (such as showing the next scene from a movie) or may be real-time, such as returning to a live feed of a sporting event. Descriptors associated with a streaming media program may be disabled when a commercial message is shown, or the descriptors may be replaced by descriptors associated with the advertising message. In any of the disclosed embodiments, a streaming media image may be configured to occupy a portion of the available screen and descriptors may be rendered such that they are displayed on top of the streaming media image in whole or in part, or are displayed in an area that does not overlap the streaming media image.

Icons, indicators, and methods of highlighting display elements may be user selectable or configurable. For example, a viewer may desire that a specific icon (such as a dollar sign) be displayed when discount coupons are available for a displayed product. The selection of icons, indicators (including sound effects), and highlighting may be performed by software in the user's receiving unit, or may result in a different version of enhancement information being provided as part of (or in conjunction with) the streaming media presentation, or a combinations of these two methods may be used.

The foregoing discussion may be briefly summarized as follows. Methods for displaying descriptors in conjunction with a streaming media presentation are disclosed. Descriptors may be positioned on top of a streaming media image to provide association with image elements of the presentation. The availability of descriptors for an image element may be indicated highlighting the element, highlighting the element when a cursor is over the element, or changing cursor appearance when over the element. Interactive access points responsive to user input may provide links or may control selection and rendering of descriptors. Element indicators may be displayed to associate descriptors with image elements. Image element identifiers may also provide association with image elements, wherein such association may be dynamic, and may indicate user response actions for additional or updated descriptors. A receiving unit receives a streaming media presentation and renders the presentation and any descriptors, indicators, highlights, and/or image element identifiers.

The foregoing description of the invention has been presented for purposes of illustration and description. It is not intended to be exhaustive or to limit the invention to the precise form disclosed, and other modifications and variations may be possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

The following numbered examples are embodiments
1. A method of rendering a descriptor in association with a streaming media presentation comprising:
   receiving said streaming media presentation
   accessing descriptor information;
   determining if descriptors are enabled;
   rendering said descriptor if descriptors are enabled;
   executing a software routine if an interactive access point is enabled for said descriptor and a corresponding user input is received; and
   discontinuing display of the descriptor if an end display condition has occurred.
2. The method of example 1, wherein said step of rendering said descriptor further comprises rendering said descriptor in a position that provides an association with a streaming media image element.
3. The method of example 1, further comprising rendering an indication that descriptors are available and enabling said descriptors if a predetermined user response to said indication is received.
4. The method of example 3, wherein said indication is an icon displayed within a streaming media image.
5. The method of example 3 wherein said indication is an audible signal.
6. The method of example 1, wherein said step of rendering said descriptor further comprises rendering an association indicator.
7. The method of example 6, wherein said step of rendering said association indicator further comprises changing the location of said association indicator to reflect a change in position of an image element.
8. A method of rendering a descriptor in conjunction with a streaming media image element comprising:
   receiving a streaming media presentation;
   accessing descriptor information;
   determining if descriptors are enabled;
   receiving pointing device position information;
   selecting a descriptor from said descriptor information using said position information;
   rendering the selected descriptor in a predetermined position associated with the streaming media image element that does not obscure important streaming media presentation content; and
   discontinuing display of said selected descriptor if an end display condition has occurred.
9. The method of example 8, further comprising executing a software routine if an interactive access point is enabled for said selected descriptor and if a corresponding input is received.
10. A method of rendering a descriptor in association with a streaming media image element comprising:
   receiving a streaming media presentation;
   accessing descriptor information;
   determining if descriptors are enabled;
   highlighting at least one streaming media image element;
   receiving a user input;
   rendering said descriptor in a predetermined position; and
   discontinuing display of the descriptor if an end display condition has occurred.
11. A method of rendering a descriptor in association with a streaming media image element comprising:
   receiving a streaming media presentation;
   accessing descriptor information;
   determining if descriptors are enabled;
   receiving pointing device position information;
   highlighting at least one streaming media image element;
   receiving a user input;
   selecting a descriptor from said descriptor information using said position information;
   rendering the selected descriptor in a predetermined position; and
   discontinuing display of the descriptor if an end display condition has occurred.
12. The method of example 11, further comprising executing a software routine if an interactive access point is enabled for said selected descriptor and if a corresponding input is received.
13. A method of rendering a descriptor in association with a streaming media image element comprising:
   receiving a streaming media presentation;
   accessing descriptor information;
   determining if descriptors are enabled;
   receiving pointing device position information;
   altering the appearance of a displayed cursor if said cursor position corresponds to a streaming media image element for which a descriptor is available;
   receiving a user input;
   selecting a descriptor from said descriptor information using said position information;
   rendering the selected descriptor in a predetermined position; and
   discontinuing display of the descriptor if an end display condition has occurred.
14. A method of rendering a descriptor in association with a streaming media image element comprising:
   receiving a streaming media presentation;
   accessing descriptor information;
   displaying a streaming media image element identifier in a first screen position within a streaming media image; and
   displaying a descriptor associated with said streaming media image element in a second screen position.
15. A method of rendering a descriptor in association with a streaming media presentation comprising:
   receiving said streaming media presentation,
   accessing descriptor information,
   displaying at least one streaming media image element identifier in a first screen position within a streaming media image,
   displaying a descriptor associated with said streaming media image element identifier in a predetermined position at least partially overlapping said streaming media image, and
   updating said descriptor in response to a user input associated with said streaming media image element identifier.
16. A method of rendering a descriptor in association with a streaming media image element comprising:
   receiving a streaming media presentation;
   accessing descriptor information;
   displaying at least one streaming media image element identifier in a first screen position providing association with said streaming media image element,
   displaying a descriptor associated with the first streaming media image element in a predetermined position at least partially overlapping the streaming media image,
   dynamically associating the streaming media image element identifier with a second streaming media image element in response to scene changes,
   and updating the descriptor to display information associated with the second streaming media image element.
17. A streaming media receiver comprising:
   a unit that receives a streaming media presentation;
   computer program code that accesses descriptor information;
   computer program code that determines if descriptors are enabled;
   computer program code that detects a rendering event; and
   computer program code that renders a descriptor.
18. The receiver of example 17 further comprising:
   computer program code that determines if an interactive access point is enabled for said descriptor;
   computer program code that determines if an interactive access point event has occurred; and
   computer program code that executes a hotlink if said hotspot is enabled and said hotspot event has occurred.
19. The receiver of example 17 wherein said code that renders a descriptor further comprises:
   computer program code that receives position information from a pointing device and selects said descriptor from said descriptor information.
20. The receiver of example 17 further comprising:
   computer program code that receives position information from a pointing device and highlights a streaming media image element.
21. The receiver of example 17 further comprising:
   computer program code that receives position information from a pointing device and alters the appearance of a cursor if said position corresponds to a predetermined streaming media image element.
22. The receiver of claim 17 further comprising:
   computer program code that renders an association indicator associating said descriptor and a streaming media image element.
23. The receiver of claim 17 further comprising:
   computer program code that receives position information from a pointing device and highlights a streaming media image element.
24. The receiver of claim 17 further comprising:
   computer program code that at least one streaming media image element identifier in a first screen position providing association with a streaming media image element.
25. The receiver of claim 24 further comprising:
   computer program code that updates said descriptor in response to a user input.
26. A streaming media receiver comprising:
   means that receive a streaming media presentation;
   means that access descriptor information;
   means that determine if descriptors are enabled;
   means that detects rendering event; and
   means that renders a descriptor

## Claims

1. A method of rendering a descriptor on top of a steaming media image of a streaming media presentation, the method comprising:
enabling the descriptor resulting in the descriptor to be rendered on the streaming media image; or
disabling the descriptor resulting in the descriptor not being rendered on the streaming media image.

2. The method according to claim 1, wherein a location of the descriptor is selected during an authoring process, wherein the streaming media image comprises a streaming media image element, wherein the descriptor is not associated with a specific streaming media image element, and wherein at the location of the descriptor the streaming media image does not contain images central to content presented in the streaming presentation.

3. The method according to claim 2, further comprising selecting the descriptor with a mouse or other pointing device resulting in additional information to be presented.

4. The method according to claim 2 or 3, wherein a font type, font size, font color, font transparency, and/or font background color of the descriptor is selected as part of the authoring process.

5. The method according to claim 1, wherein the streaming media image comprises a streaming media image element, the method comprising:
positioning a cursor over or in proximity to the streaming media element; and
receiving a user input, such as a mouse button event or keyboard entry, while the cursor is over or in proximity to the streaming media element resulting in enabling rendering of the descriptor.

6. The method according to claim 5, wherein the descriptor is positioned on the streaming media image such that no relevant scene information is obscured.

7. The method according to claim 5, wherein a position of the descriptor on the streaming media image is user specified or adjustable.

8. The method according to any one of the claims 5-7, wherein the descriptor comprises text, and wherein if the amount of text is greater than may be displayed at one time in the size of descriptor, the descriptor contains a scroll bar or other button, or the text automatically scrolls at a predetermined rate.

9. The method according to any one of the claims 5-8, wherein the descriptor contains one or more interactive access points to provide control functions.

10. The method according to any one of the claims 5-9, wherein, if more than one descriptor is rendered, one descriptor includes an indication, such as a predetermined outline color, showing that it is the descriptor currently associated with a user input device.

11. The method according to any one of the claims 5-10, comprising selecting one or more streaming media image elements for which descriptors can be rendered, and continue rendering of descriptors until a different configuration is selected or until descriptors are not available for the selected image elements.

12. The method according to any one of the claims 5-10, comprising selecting one or more streaming media image elements for which descriptors can be rendered, and wherein descriptors associated with selected image elements are rendered only when the selected image elements are displayed.

13. The method according to claim 11 or 12, wherein descriptors are be disabled or replaced by other descriptors during commercial messages.

14. The method according to any one of the preceding claims, wherein the descriptor is rendered to appear to be conformally mapped to a surface, such as the side of an automobile or appliance, causing the descriptor to appear as part of a scene.

15. The method according to any one of the preceding claims, wherein the descriptor provides dynamic or real-time information.
